# EUROPEAN PATENT APPLICATION

(11) **EP 4 835 601 A1**
(43) Date of publication of application: **04.11.2026**
(21) Application number: 24912214.4
(22) Date of filing: 02.12.2024
(51) Int. Cl.: G05D 1/224, A01B 69/00

(54) **REMOTE DEVICE AND REMOTE CONTROL SYSTEM**

(30) Priority: 27.12.2023 JP 2023221131
(71) Applicant: KUBOTA CORPORATION, Osaka-shi, Osaka 530-0011 (JP)
(72) Inventor: FUJII Takafumi, Sakai-shi, Osaka 590-0908 (JP); UKENA Tetsuhiro, Sakai-shi, Osaka 590-0908 (JP)
(74) Representative: Cabinet Beau de Loménie
(86) International application number: PCT/JP2024/042560
(87) International publication number: WO 2025/142324

(57) **Abstract**

To eliminate or reduce the likelihood that a remote manipulation performed by a remote user will be hindered.

A remote device (30) includes a first communicator (33) to communicate with a remote working machine (1), a remote manipulator (35) to receive an operation, a controller (31) configured or programmed to executes a first application (32a) to perform a process relating to a remote manipulation of the remote working machine (1) via the first communicator (33) in accordance with the operation of the remote manipulator (35), and a second application (32b) to perform a process not relating to the remote manipulation, and a display (34) to display a first application screen (W1) to indicate information relating to the first application (32a), and a second application screen (W2) to indicate information relating to the second application (32b). The display (34) is configured to, in a case where the controller (31) is performing the remote manipulation by executing the first application (32a), prioritize displaying the first application screen (W1) over displaying the second application screen (W2).

## Description

### Technical Field

The present invention relates to remote devices and remote manipulation systems to remotely manipulate working machines.

### Background Art

There is a known remote manipulation (control) system to generate a monitoring screen used to monitor the travel state and the work state of a working vehicle and cause a display to display the generated monitoring screen (for example, Patent Literature 1).

### Citation List

### Patent Literature

PTL 1: Japanese Unexamined Patent Application Publication No. 2021-36796

### Summary of Invention

### Technical Problem

A human remote manipulator (remote user) needs to check a monitoring screen to perform remote manipulation (remote control). The remote manipulation (control) system of Patent Literature 1 does not take into consideration cases where information different from information relating to the remote manipulation displayed on the display hinders the remote manipulation performed by the human remote manipulator.

The present invention was made to solve the above-described issue, and an object thereof is to provide remote devices and remote manipulation systems each of which makes it possible to eliminate or reduce the likelihood that the remote manipulation performed by the human remote manipulator will be hindered.

### Solution to Problem

A remote device according to an example embodiment of the present invention includes a first communicator to communicate with a remote working machine, a remote manipulator to receive an operation, a controller configured or programmed to execute a first application to perform a process relating to a remote manipulation of the remote working machine via the first communicator in accordance with the operation of the remote manipulator, and a second application to perform a process not relating to the remote manipulation, and a display to display a first application screen to indicate information relating to the first application, and a second application screen to indicate information relating to the second application, wherein the display is configured to, in a case where the controller is performing the remote manipulation by executing the first application, prioritize displaying the first application screen over displaying the second application screen.

The display may be configured to, upon receipt of a display instruction to display the second application screen in a case where the controller is performing the remote manipulation by executing the first application, display the first application screen instead of the second application screen, as a priority process.

The first application may be configured to switch between a first mode to perform the remote manipulation and a second mode to monitor the remote working machine without performing the remote manipulation. The display may be configured to, in a case where the first application is in the first mode, perform the priority process upon receipt of the display instruction to display the second application screen, and in a case where the first application is in the second mode, display the second application screen without performing the priority process upon receipt of the display instruction to display the second application screen.

The display may be configured to, when the controller stops performing the remote manipulation by stopping executing the first application in a case where the display is performing the priority process, display the second application screen instead of the first application screen.

The display may be configured to, upon receipt of the display instruction to display the second application screen in a case where the controller is performing the remote manipulation by executing the first application, display the second application screen and then display the first application screen again, as the priority process.

The display may be configured to, upon receipt of the display instruction to display the second application screen in a case where the controller is performing the remote manipulation by executing the first application, display the second application screen and then display the first application screen on top of the second application screen, as the priority process.

The display may be configured to, upon receipt of the display instruction to display the second application screen in a case where the controller is performing the remote manipulation by executing the first application, display the second application screen in an area that does not overlap the first application screen, as the priority process.

The display may be configured to display the second application screen upon receipt of a display instruction to display the second application screen in a case where the controller is performing the remote manipulation by executing the first application. The controller may be configured or programmed to stop performing the remote manipulation by stopping executing the first application when the display displays the second application screen.

The remote device may be configured to include an input interface configured to receive an input. The display may be configured to display (i) a first object to receive a display instruction relating to the first application and (ii) a second object to receive a display instruction to display the second application screen. The input interface may be configured such that, in a case where the controller is performing the remote manipulation by executing the first application, an operation is accepted at an area excluding the second object.

The display may be configured to display a third object indicating an indicated position corresponding to the operation of the input interface, and in a case where the controller is performing the remote manipulation by executing the first application, limit a range where the third object is allowed to be displayed to the area excluding the second object.

The remote device may include an input interface to receive an input. The display may be configured to display (i) a first object to be operated via the input interface and receive a display instruction relating to the first application and (ii) a second object to be operated via the input interface and receive a display instruction to display the second application screen. The input interface may be configured to not accept operations for the first object and the second object while the display is displaying the first application screen.

A remote manipulation system according to an example embodiment of the present invention includes the remote device, and the remote working machine to be remotely manipulated by the remote device, wherein the remote working machine includes a second communicator to mutually communicate with the first communicator.

### Advantageous Effects of Invention

With the present invention, it is possible to eliminate or reduce the likelihood that the remote manipulation performed by the human remote manipulator will be hindered.

### Brief Description of Drawings

[FIG. 1] FIG. 1 is a block diagram of a remote manipulation system according to an example embodiment of the present invention.
[FIG. 2] FIG. 2 is a side view of a tractor, which is an example of a remote working machine.
[FIG. 3] FIG. 3 illustrates an example of correspondence data.
[FIG. 4] FIG. 4 illustrates an example of a display screen (first application screen).
[FIG. 5A] FIG. 5A illustrates an example of a display screen (second application screen).
[FIG. 5B] FIG. 5B is an illustration to describe an example of a second application.
[FIG. 6] FIG. 6 is a first diagram illustrating a priority process.
[FIG. 7] FIG. 7 is a second diagram illustrating a priority process.
[FIG. 8] FIG. 8 is a third diagram illustrating a priority process.
[FIG. 9] FIG. 9 illustrates another example of a display screen on a display according to a second variation.
[FIG. 10] FIG. 10 is an illustration to describe a priority process according to a third variation.
[FIG. 11] FIG. 11 is a flowchart showing operations of a display controller.
[FIG. 12] FIG. 12 is a sequence diagram showing operations of an input interface, a display controller and a controller.
[FIG. 13] FIG. 13 is a sequence diagram showing operations of an input interface, a display controller and a controller according to a first variation.
[FIG. 14] FIG. 14 is a flowchart showing operations of a controller according to a second variation.
[FIG. 15] FIG. 15 illustrates an example of a display screen on a display according to a third variation.
[FIG. 16] FIG. 16 illustrates a range where a third object is allowed to be displayed according to a fourth variation.

### Description of Embodiments

The following description discusses example embodiments of the present invention with reference to drawings.

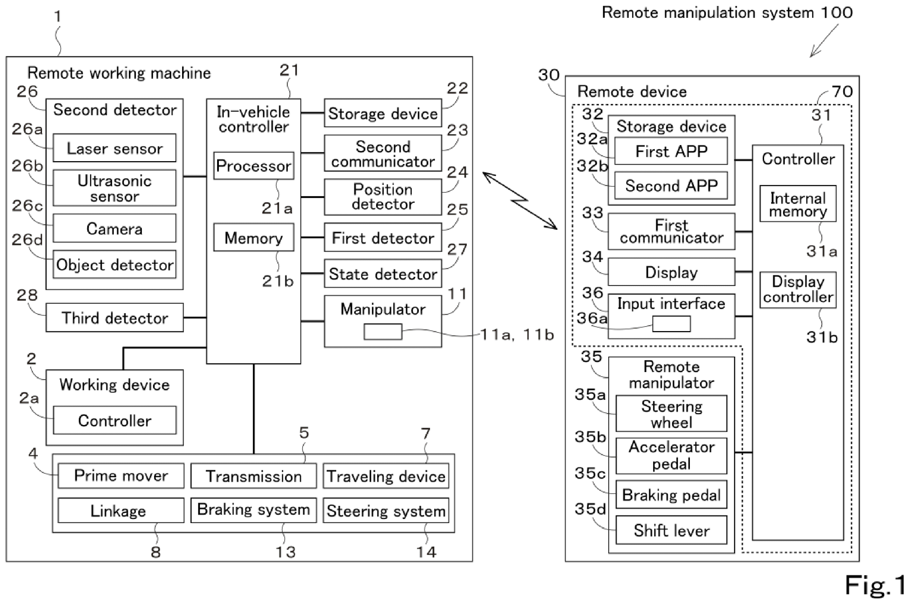

FIG. 1 is a block diagram of a remote manipulation system 100 according to an example embodiment of the present invention. The remote manipulation system 100 includes a remote working machine 1 and a remote device 30. With the remote manipulation system 100 and the remote device 30, it is possible to perform remote manipulation (or remote operation) of the remote working machine 1 and remote monitoring of the remote working machine 1. The remote working machine 1 is an agricultural machine (also referred to as "remotely manipulated agricultural machine") to be remotely operated (for example, remotely caused to travel, remotely caused to perform work, and/or the like) by the remote device 30. Examples of the remote working machine 1 include agricultural machines such as a tractor with a working device 2 such as an implement attached thereto, a rice transplanter, a combine and the like . For convenience of description, the following describes the remote working machine 1 using a tractor as an example, and the description of the other types of agricultural machines are omitted. The following describes, as an example of the remote working machine 1, a tractor that includes an operator's seat 10 for a worker (operator) to sit on, but the remote working machine 1 may be an agricultural machine including no operator's seat 10 designed for remote manipulation only.

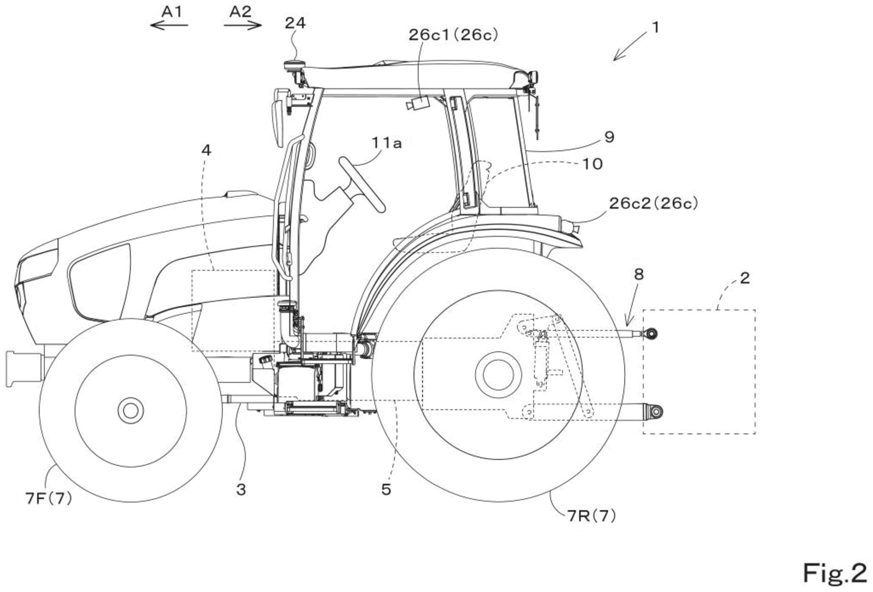

FIG. 2 is a side view of a tractor, which is an example of the remote working machine 1. In the following description, a forward direction with respect to a worker (user) sitting on an operator's seat 10 of the remote working machine 1 (direction of arrow A1 in FIG. 2) is referred to as "forward", a rearward direction with respect to the worker (direction of arrow A2 in FIG. 2) is referred to as "rearward", a leftward direction with respect to the worker (direction toward the viewer of FIG. 2) is referred to as "leftward", and a rightward direction with respect to the worker (direction away from the viewer of FIG. 2) is referred to as "rightward". A horizontal direction perpendicular to a front-rear direction of the remote working machine 1 is referred to as "width direction". The remote working machine 1 includes a machine body 3. The machine body 3 is provided with a traveling device 7. The traveling device 7 includes front wheels 7F and rear wheels 7R provided on the left and right sides of the machine body 3, and supports the machine body 3 such that the machine body 3 is allowed to travel. The traveling device 7 may be a crawler traveling device.

As shown in FIGS. 1 and 2, the machine body 3 is provided with a prime mover 4, a transmission 5, a braking system 13 and a steering system 14. The prime mover 4 includes an engine (diesel engine, gasoline engine), an electrical motor, and/or the like.

The transmission 5, for example, performs the operation to change speed stages to change the propulsive force of the traveling device 7 and switch the direction of travel of the traveling device 7 between forward and rearward. The transmission 5 includes a plurality of gears to transmit power, shifter(s) to change connections of the gears, clutch(es) to switch between transmission and interruption of power, and/or the like, and performs the operation to change speed stages using such elements. The transmission 5 can switch the travel mode between (i) a "4WD equal-speed state" which is a four-wheel drive (4WD) for the front wheels 7F and the rear wheels 7R to be driven by power and in which the rotational speeds of the front wheels 7F and the rear wheels 7R are the same or substantially the same, (ii) a "4WD increasing-speed state" which is the four-wheel drive and in which the rotational speed of the front wheels 7F is faster than the rotational speed of the rear wheels 7R, and (iii) a two-wheel drive (2WD) in which only the rear wheels 7R are driven. Note that, in the present example embodiment, the transmission 5 is configured such that a main transmission portion (for example, continuously variable transmission) and an auxiliary transmission portion (for example, stepped transmission) can each independently perform the operation to change speed stages.

The braking system 13 brakes the machine body 3. The steering system 14 steers the machine body 3.

A manipulator 11 to manually operate the remote working machine 1 is provided in the vicinity of the operator's seat 10. The remote working machine 1 is configured to travel and perform work unattended, but can also be caused to travel and perform work using the working device 2 by the user sitting in the operator's seat 10 operating the manipulator 11. The manipulator 11 includes a steering wheel 11a, an accelerator pedal 11b, a brake pedal, a shift lever, and/or the like.

A linkage 8 is provided at a rear portion of the machine body 3. The linkage 8 includes a three-point linkage and/or the like. The working device 2 (implement) is attachable to and detachable from the linkage 8. The remote working machine 1 (machine body 3) is configured to tow the working device 2 when the working device 2 is connected to the linkage 8 and the remote working machine 1 is caused to travel by the traveling device 7. The linkage 8 is configured to raise and lower the working device 2 and change the attitude of the working device 2 by actuator(s) (for example, hydraulic cylinder(s)) being driven.

Examples of the working device 2 include a tiller to perform tillage, a fertilizer spreader to spread fertilizer, an agricultural chemical spreader to spread agricultural chemicals, a harvester for harvesting, a mower to mow grass or the like, a tedder to ted grass or the like, a rake to rake grass or the like, and a baler to bale grass or the like. The remote working machine 1 performs agricultural work on an agricultural field using such a working device 2.

As shown in FIG. 1, the remote working machine 1 includes an in-vehicle controller 21, a storage device (memory and/or storage) 22, a second communicator (in-vehicle communicator) 23, a position detector 24, a first detector (inertial measurement unit) 25, a second detector (sensor) 26, a state detector 27, and a third detector 28. An in-vehicle network such as CAN, LIN, and/or FlexRay is provided in the remote working machine 1, and the in-vehicle controller 21 is electrically connected to the storage device 22, the second communicator 23, the position detector 24 and the like.

The in-vehicle controller 21 includes an electronic control unit (ECU) that includes a processor 21a and a memory 21b. The in-vehicle controller 21 is configured or programmed to control the operation of elements of the remote working machine 1. The in-vehicle controller 21 controls a group of actuators that include electrical and/or hydraulic motor(s), cylinder(s), control valve(s) to actuate elements such as the prime mover 4, the transmission 5, the traveling device 7, the braking system 13, and/or the linkage 8 of the remote working machine 1, for example. The memory 21b includes a volatile memory, a non-volatile memory, and/or the like. The memory 21b of the in-vehicle controller 21 stores information and data for the in-vehicle controller 21 to control the operation of elements of the remote working machine 1 in a read-write manner.

The storage device 22 is, for example, a solid state drive (SSD), a hard disk drive (HDD), or the like.

The second communicator 23 includes antenna(s), integrated circuit(s) (IC), electrical circuit(s) and/or the like for wireless communication via a mobile phone communication network, the Internet or a wireless LAN. The in-vehicle controller 21 wirelessly communicates with the remote device 30 via the second communicator 23. The in-vehicle controller 21 includes a real time clock (RTC) and is configured or programmed to measure date and time.

Note that the description of the present example embodiment discusses an example in which the remote working machine 1 and the remote device 30 communicate with each other via a mobile phone communication network or the like. Alternatively, the remote working machine 1 and the remote device 30 may be configured to communicate via a mobile phone communication network or the like and an external device such as a server or a relay (repeater). The remote working machine 1 and the remote device 30 may directly communicate with each other via a near field wireless signal such as, for example, a Bluetooth (registered trademark) Low Energy (BLE) signal or a Ultra High Frequency (UHF) signal. In such a case, it is only necessary that interfaces for near field wireless communication be provided in or on the second communicator 23 and the remote device 30, respectively.

The position detector 24 detects the position thereof (positional information including latitude and longitude) using a satellite positioning system. That is, the position detector 24 receives signals (positions of positioning satellites, transmission date and time, correction information, etc.) transmitted from positioning satellites and detects the position thereof based on the received signals. The position detector 24 may be configured to detect, as the position thereof, a position corrected based on a signal of correction information transmitted from a base station (reference station) which is configured to receive signals from the positioning satellites. The position detector 24 may be configured to calculate the position of the remote working machine 1 based on the detected position thereof and stored outer contour information relating to the remote working machine 1. The position detector 24 may be configured to calculate the position of the working device 2 based on the detected position thereof, stored outer contour information relating to the working device 2, and the position at which the working device 2 is attached to the machine body 3.

The first detector 25 includes a gyroscope sensor, an acceleration sensor and/or the like, and is configured to detect the roll angle, the pitch angle, and the yaw angle, etc. of the remote working machine 1 (machine body 3). That is, the first detector 25 detects the leftward, rightward, forward, and rearward inclinations of the remote working machine 1 with respect to a horizontal state of the remote working machine 1 and the steering state (steering angle, steering direction and/or the like) of the remote working machine 1.

The second detector 26 senses (monitors) a surrounding area of the remote working machine 1. For example, the second detector 26 includes a laser sensor 26a, an ultrasonic sensor 26b, a camera 26c, and an object detector 26d. In the present example embodiment, the second detector 26 includes a plurality of the laser sensors 26a and a plurality of the ultrasonic sensors 26b. The plurality of laser sensors 26a and the plurality of ultrasonic sensors 26b are located at predetermined areas such as a front portion, a rear portion, right and left side portions of the remote working machine 1 to detect the conditions of the surrounding area including the front, rear, right and left sides of the remote working machine 1 and objects in the surrounding area. For example, the laser sensors 26a and the ultrasonic sensors 26b are provided at predetermined positions on the machine body 3 such that objects located within a predetermined target detection distance from the remote working machine 1 and lower than the machine body 3 are also detectable.

The laser sensors 26a and the ultrasonic sensors 26b are examples of object sensors. A plurality of at least one of the laser sensors 26a and the ultrasonic sensors 26b may be provided in the second detector 26 as object sensors. A plurality of other object sensors may be provided in the second detector 26.

Each laser sensor 26a includes an optical sensor such as a light detection and ranging (LiDAR) sensor. The laser sensor 26a emits millions of pulses of measurement light (laser light) per second from a light source such as a laser diode, and scans the measurement light in a horizontal direction and/or a vertical direction by reflecting it at a rotating mirror to project the light onto a predetermined detection area (sensing area). Then, the laser sensor 26a receives, at a photoreceptor, the measurement light reflected by an object.

The object detector 26d includes electrical circuit(s), IC(s), and/or the like to detect the presence or absence of an object, the position of the object, the type of the object and/or the like based on a light reception signal outputted from the photoreceptor of the laser sensor 26a. The object detector 26d detects the distance to the object based on the period of time between the emission of the measurement light from the laser sensor 26a and the reception of the reflected light by the laser sensor 26a (using time of flight (ToF) method). Examples of the object to be detected by the object detector 26d include a worksite or an agricultural field for the remote working machine 1 to travel and work, crops in the agricultural field, ground, a road, other objects and people.

Each ultrasonic sensor 26b includes an aerial ultrasonic sensor such as sonar. The ultrasonic sensor 26b transmits measurement waves (ultrasonic waves) from a transmitter to a predetermined detection range, and receives, at a receiver, the reflected measurement waves reflected by an object. The object detector 26d detects, based on a signal outputted from the receiver of the ultrasonic sensor 26b, the presence or absence of an object, the position of the object, the type of the object, and/or the like. The object detector 26d detects the distance to the object based on the period of time between the emission of the measurement waves by the ultrasonic sensor 26b and the reception of the reflected waves by the ultrasonic sensor 26b (using ToF method).

Each camera 26c includes a charge coupled devices (CCD) camera with a CCD image sensor installed therein, a complementary metal oxide semiconductor (CMOS) camera with a CMOS image sensor installed therein, and/or the like. As shown in FIG. 2, the cameras 26c are located at predetermined areas such as a front portion, a rear portion, left and right side portions of the remote working machine 1 and/or the inside of a cabin 9, to capture one or more images of the surrounding area of the remote working machine 1 including the front, the rear and the left and right sides, etc. of the remote working machine 1, and output data of the captured image(s). The camera 26c is an example of an imager.

For example, as shown in FIG. 2, a camera 26c1 located inside the cabin 9 captures an image of an area forward of the remote working machine 1 from the operator's seat 10. More specifically, the camera 26c1 captures an image of an area forward (in the direction of travel, in direction A1) of the remote working machine 1 that has the same or substantially the same field of view as the user (operator) sitting in the operator's seat 10. That is, with the camera 26c1, it is possible to obtain a captured image of an area in the direction of travel of the remote working machine 1.

As shown in FIG. 2, a camera 26c2 provided at the rear portion of the machine body 3 of the remote working machine 1 captures an image of an area rearward of the remote working machine 1. More specifically, the camera 26c2 captures an image of an aera in the direction opposite to the field of view of the operator sitting in the operator' s seat 10 (area in direction A2). That is, with the camera 26c2, it is possible to obtain a captured image of an area in the direction opposite to the direction of travel of the remote working machine 1.

The object detector 26d may be configured to detect, based on the data of the captured image(s) outputted from the camera(s) 26c, the presence or absence of an object, the position of the object, the type of the object, and/or the like.

The second detector 26 senses the conditions in the surrounding area of the remote working machine 1 and the working device 2 with the laser sensor(s) 26a, the ultrasonic sensor(s) 26b, the camera(s) 26c and the object detector 26d, and outputs sensed information indicating the result of sensing to the in-vehicle controller 21. The sensed information at least includes detection information from the object detector 26d and the data of the image(s) captured by the camera(s) 26c, but may also include other sensed information such as detection information from the laser sensor(s) 26a and detection information from the ultrasonic sensor(s) 26b.

The state detector 27 detects the operating state of the remote working machine 1. Specifically, the state detector 27 includes sensors provided at various positions on the remote working machine 1 (machine body 3) and a computing unit, and the computing unit detects (computes) the operating state of the remote working machine 1 based on output signals from the sensors. The state of the remote working machine 1 to be detected by the state detector 27 includes the driven state and stopped state of elements of the remote working machine 1, and the direction of travel, travel speed, and/or the acceleration of the remote working machine 1, and/or the like.

The state detector 27 generates detection information indicating the detected operating state of the remote working machine 1, and outputs the generated detection information to the in-vehicle controller 21. For example, the detection information from the state detector 27 includes manipulation information for the remote working machine 1 and the working device 2. The manipulation information includes, for example, at least one of the speed (or acceleration) of the remote working machine 1, the gear shift position of the transmission 5, the braking position of the braking system 13, or the operation position of the working device 2.

The third detector 28 detects the state of the working device 2. The third detector 28 includes sensors provided at various positions on the linkage 8 and the working device 2 and a computing unit, and the computing unit detects (computes) the operating state of the working device 2 based on output signals from the sensors. The state of the working device 2 to be detected by the third detector 28 includes the driven state and stopped state of elements of the working device 2, the inclination of the working device 2, the height of the working device 2 from the ground, and/or the like.

Note that in the case where the type of the remote working machine 1 is a rice transplanter, the third detector 28 may be configured to detect, based on output signals from the sensors provided in or on a seedling transplanter and/or the like, the driven state and stopped state of mechanisms relating to the seedling transplanter, the remaining amount of material (seedlings, fertilizer), and/or the like. In the case where the type of the remote working machine 1 is a combine, the third detector 28 may be configured to detect, based on output signals from the sensors provided in or on a reaper, a grain tank and/or the like, the driven state and stopped state of mechanisms relating to harvesting, the characteristics of harvested grain, and/or the like.

The position detector 24, the first detector 25, the state detector 27, and the third detector 28 output detection information indicating results detected at predetermined interval(s) or at a predetermined point in time to the in-vehicle controller 21 at appropriate point(s) in time. The second detector 26 also outputs sensed information indicating the result of sensing performed at predetermined interval(s) or at a predetermined point in time to the in-vehicle controller 21 at appropriate point(s) in time. The in-vehicle controller 21 causes the internal memory 21b to store such detection information and sensed information.

The in-vehicle controller 21 transmits pieces of such detection information and pieces of such sensed information stored in the internal memory 21b to the remote device 30 sequentially via the second communicator 23 at predetermined interval(s) or at a predetermined point in time in the case of the remote operation.

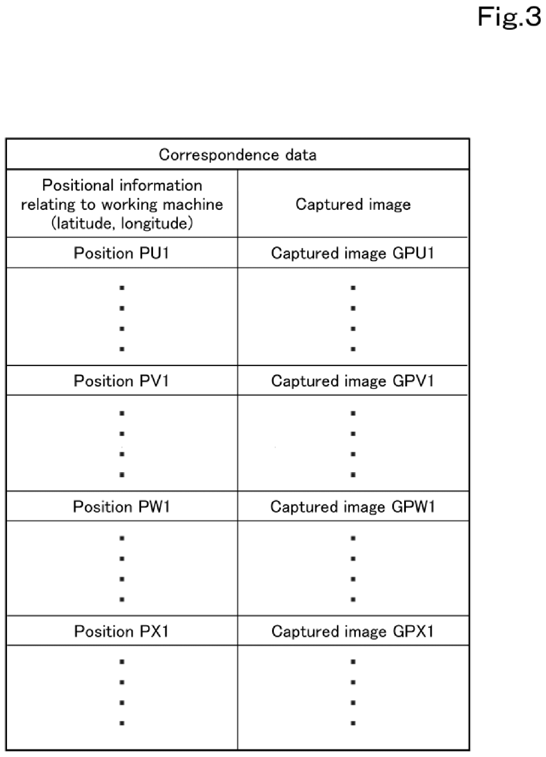

The detection information and sensed information transmitted from the remote working machine 1 in such a manner include correspondence data in which positional information of the remote working machine 1 and the captured image of an area in the direction of travel of the remote working machine 1 are associated with each other (see FIG. 3). FIG. 3 shows an example of correspondence data. That is, pieces of correspondence data in each of which detection information from the position detector 24 (that is, positional information of the remote working machine 1) and sensed information from the second detector 26 (for example, an image captured by the camera 26c1) are associated with each other are sequentially transmitted to the remote device 30. Regarding captured images, as shown in FIG. 3, pieces of correspondence data in which pieces of positional information (for example, positions PU1, PV1, PW1, PX1) of the remote working machine 1 detected by the position detector 24 and captured images (for example, captured images GPU1, GPV1, GPW1, GPX1) captured by the camera 26c1 are associated with each other are sequentially transmitted to the remote device 30.

The in-vehicle controller 21 communicates with a controller 2a included in the working device 2, and causes the controller 2a to control the operation of the working device 2. That is, the in-vehicle controller 21 controls the operation of the working device 2 via the controller 2a to cause the working device 2 to perform work on an agricultural field. For example, the controller 2a includes CPU(s), one or more memories, and the like. Note that some working devices 2 do not include the controller 2a. In such cases, the in-vehicle controller 21 controls the linkage 8 to control the attitude of the working device 2 and cause the working device 2 to perform work on an agricultural field.

The in-vehicle controller 21 controls, based on detection information and the like acquired from the first detector 25, the second detector 26, the state detector 27, the third detector 28 and/or the like, travel of the remote working machine 1, work performed by the working device 2, and other operations of the remote working machine 1. In the case where the in-vehicle controller 21 receives via the second communicator 23 a remote manipulation signal transmitted from the remote device 30, the in-vehicle controller 21 controls the travel of the remote working machine 1, the work performed by the working device 2, and other operations of the remote working machine 1 based on the remote manipulation signal in addition to the above-mentioned information.

When the in-vehicle controller 21 controls the travel of the remote working machine 1 or the work performed by the working device 2, the in-vehicle controller 21 determines, based on the detection information from the object detector 26d, whether or not an object is at a distance less than a predetermined distance from the remote working machine 1 or the working device 2 and the object is likely to contact the remote working machine 1 or the working device 2. Then, in the case where the in-vehicle controller 21 determines that an object is at a distance less than a predetermined distance from the remote working machine 1 or the working device 2 and the object is likely to contact the remote working machine 1 or the working device 2, the in-vehicle controller 21 controls the traveling device 7, the working device 2 and/or the like to automatically stop the travel or work of the remote working machine 1 to avoid contact with the object.

The following describes the remote device 30. As shown in FIG. 1, the remote device 30 is located at a position away from the remote working machine 1. With the remote device 30, it is possible for a remote user (human remote manipulator, operator) to remotely control (operate, manipulate) the remote working machine 1, and to monitor the state of the remote working machine 1 and the surrounding environment of the remote working machine 1. The remote device 30 includes a controller 31, a storage device (memory and/or storage) 32, a first communicator 33, a display 34, a remote manipulator 35, and an input interface 36.

The controller 31 includes a processor configured or programmed to control the operation of each element of the remote device 30. This processor functions as the controller 31 to control the operation of each element of the remote device 30, for example, by performing a remote control program, an application and/or the like stored in the storage device 32. The controller 31 may include hardware including integrated circuit(s) (IC chip(s)) and/or the like, or may be realized by software using a computer. In the later case, the computer includes a recording medium storing program(s) that is/are software to achieve functions of the controller 31 and various data relating to the remote working machine 1 in a computer-readable manner, an arithmetic circuit such as a central processing unit (CPU) to execute instructions of the program(s), a random access memory (RAM) where the programs and data are loaded, and/or the like. The arithmetic circuit reads the program(s) from the recording medium and executes the program(s), thus achieving the functions of the controller 31.

An internal memory 31a included in the controller 31 is a volatile or nonvolatile memory. The internal memory 31a stores information and data for the controller 31 to control the operation of each element of the remote device 30 in a read-write manner.

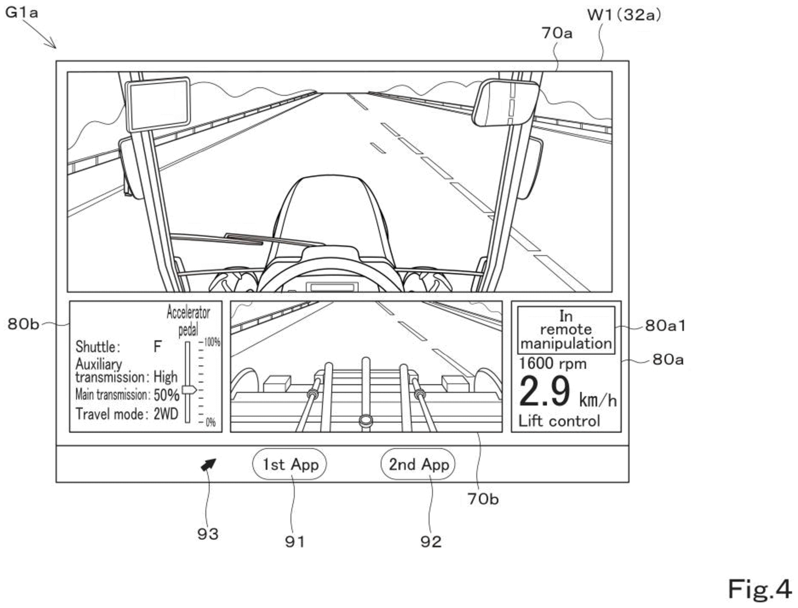

A display controller 31b included in the controller 31 includes the function to control a display screen G displayed by the display 34. For example, the display controller 31b causes the display 34 to display a first application screen W1 (FIG. 4) to indicate information relating to remote operation.

The storage device 32 prestores applications such as a remote control program to remotely operate the remote working machine 1 and a remote monitoring program to remotely monitor the remote working machine 1, various data, and/or the like. The storage device 32 is, for example, a solid state drive (SSD), hard disk drive (HDD) and/or the like.

The first communicator 33 includes antenna(s), integrated circuit(s) (IC), electrical circuit(s) and/or the like for wireless communication via a mobile phone communication network, the Internet or a wireless LAN. The first communicator 33 is configured to wirelessly communicate with the remote working machine 1 under control of the controller 31. The first communicator 33 receives various data (detection information from the position detector 24, the first detector 25, the state detector 27, and the third detector 28, sensed information from the second detector 26, and/or the like) transmitted from the second communicator 23. For example, the first communicator 33 receives correspondence data in which positional information of the remote working machine 1 and captured image(s) of an area in the direction of travel of the remote working machine 1 are associated with each other.

The display 34 includes, for example, a liquid crystal display (LCD) or an organic light emitting diode (OLED) display. The display 34 displays various information for remote operation of the remote working machine 1. For example, the display 34 displays, based on an instruction signal from the display controller 31b, the first application screen W1 (see FIG. 4 described later) to indicate information relating to remote operation of the remote working machine 1. The first application screen W1 displays images captured by a plurality of the cameras 26c.

The input interface 36 is configured to operate the remote device 30. The remote user (human remote manipulator) can input instructions into the remote device 30 by operating the input interface 36. The input interface 36 includes, for example, a pointing device 36a such as a mouse. The input interface 36 includes sensor(s) to detect operation amount, operation speed, operation direction of the user's operation and/or the like, and a driver to calculate (define) an instruction signal for the remote device 30 according to detection result(s) from the sensor(s). The driver includes a program stored in the storage device 32. When the remote user (human remote manipulator) operates the input interface 36, the sensor(s) of the input interface 36 detects the operation amount and/or the like, and inputs the detected operation amount into the driver of the input interface 36. The driver of the input interface 36 defines an instruction signal according to the detection result(s) from the sensor(s). When the input interface 36 defines the instruction signal, the input interface 36 inputs the defined instruction signal into the controller 31. The controller 31 controls the remote device 30 based on the instruction signal inputted from the input interface 36.

Note that the input interface 36 may be a touch panel included in the display 34 to make it possible to detect a touch on the display 34 or may include hardware switch(es) and/or the like.

The remote manipulator 35 is a device to perform a remote manipulation in which the remote manipulator 35 remotely operates (remotely manipulates) the remote working machine 1. The remote manipulator 35 includes a steering wheel 35a, an accelerator pedal 35b, a braking pedal 35c, and a shift lever 35d which are provided in the vicinity of a remote user's seat. The remote manipulator 35 receives the remote user's operation. The remote user remotely manipulates (remotely controls, remotely operates) the travel of the remote working machine 1 or the work performed by the working device 2 by operating the remote manipulator 35 while sitting in the remote user's seat. The remote user monitors the remote working machine 1 and the surrounding environment of the remote working machine 1 via the display 34. The remote user can input predetermined information or instructions into the remote device 30 by operating the remote manipulator 35. Note that the remote manipulator 35 may be a touch pad, hardware switch(es) and/or the like.

When the remote user operates the remote manipulator 35 and thus inputs an action instruction for the remote working machine 1, the controller 31 generates a remote manipulation signal corresponding to the inputted action instruction and causes the first communicator 33 to transmit the generated remote manipulation signal to the remote working machine 1. That is, the remote manipulation signal corresponding to the operation of the steering wheel 35a, the accelerator pedal 35b, the braking pedal 35c and/or the shift lever 35d is transmitted to the remote working machine 1. When the in-vehicle controller 21 of the remote working machine 1 receives the remote manipulation signal from the remote device 30 via the second communicator 23, the in-vehicle controller 21 causes element(s) of the remote working machine 1 to operate to control the travel and steering of the remote working machine 1 and/or control working action of the working device 2, based on the remote manipulation signal, the detection information from the position detector 24, the sensed information from the second detector 26, and the detection information from the state detector 27.

The in-vehicle controller 21 transmits, to the remote device 30 via the second communicator 23, the detection information from the position detector 24, the first detector 25, the state detector 27 and the third detector 28 and the sensed information from the second detector 26. When the controller 31 of the remote device 30 receives the detection information and sensed information via the first communicator 33, the controller 31 causes the internal memory 31a to store the received information and to cause the display 34 to display the received information, etc.

Note that, as shown in FIG. 1, the remote device 30 may include a display terminal 70 and the remote manipulator 35. That is, the display terminal 70 may be a terminal device including the controller 31, the storage device 32, the first communicator 33, the display 34, and the input interface 36. Examples of the display terminal 70 include portable terminal devices such as a tablet and a smartphone, and stationary computers provided at a base station.

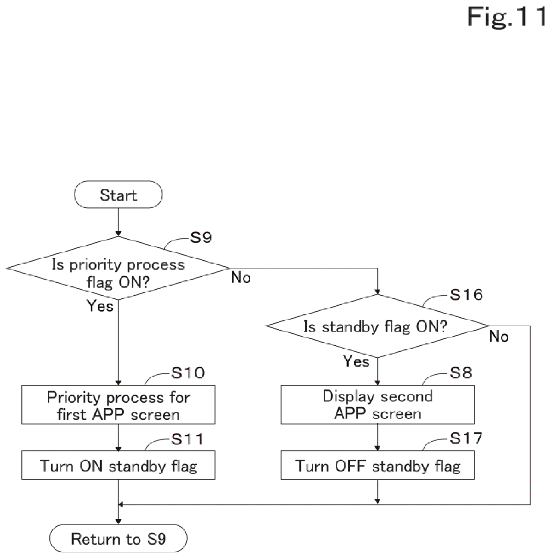

The remote device 30 is configured to perform another process in addition to a process relating to the remote manipulation of the remote working machine 1. As shown in FIG. 1, the storage device 32 stores a first application 32a to perform a process relating to the remote manipulation in accordance with the operation of the remote manipulator 35, and a second application 32b to perform a process not relating to the remote manipulation. In FIG. 1, the applications are indicated as "APP" for explanatory convenience. The same applies to FIGS. 11 to 14 described later. Note that, although FIG. 1 illustrates a single second application 32b, a plurality of second applications 32b may be provided, and the number of second applications is not limited.

The controller 31 is configured or programmed to, when the remote user performs an operation to select the first application 32a, execute the first application 32a. The controller 31 is configured or programmed to, when the remote user performs an operation to select the second application 32b, execute the second application 32b.

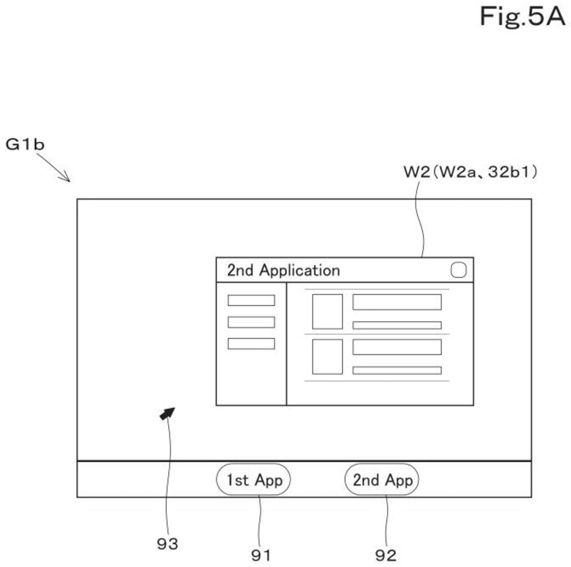

The controller 31 is configured or programmed to cause the display 34 to display the first application screen W1 (FIG. 4) to indicate information relating to the first application 32a and a second application screen W2 (FIG. 5A) to indicate information relating to the second application 32b. The display 34 displays the first application screen W1 and the second application screen W2 based on instruction signals from the display controller 31b.

FIGS. 4 to 10 each illustrate an example of a display screen G of the display 34. For example, as shown in FIG. 4, the display controller 31b causes the display 34 to display the first application screen W1. The display controller 31b causes the display 34 to display the first application screen W1 including a first image display portion 70a and a second image display portion 70b where captured images captured by the plurality of cameras 26c provided at the remote working machine 1 are shown. The first image display portion 70a displays an image of an area forward of the remote working machine 1 captured by the camera 26c1 from the point of view of a human driver (point of view of the user sitting in the operator' s seat 10). The second image display portion 70b displays an images of an area rearward of the remote working machine 1 captured by the camera 26c2.

The display controller 31b causes the display 34 to display the first application screen W1 including a first state display portion 80a and a second state display portion 80b where the state of the remote working machine 1 detected by the first detector 25 of the remote working machine 1 and the in-vehicle controller 21 are shown. The first state display portion 80a displays whether the remote working machine 1 is traveling by remote operation (mode display portion 80a1 of FIG. 4), the travel speed of the remote working machine 1 (machine body 3), the rotation speed of the prime mover 4, and/or the like. The second state display portion 80b displays the direction of travel (forward or rearward) of the traveling device 7, the state of the auxiliary transmission (for example, speed stage) of the transmission 5, the state of the main transmission (for example, speed stage) of the transmission 5, the travel mode (for example, two-wheeled drive (2WD) or the like) of the remote working machine 1, and the operation amount of the accelerator pedal 35b. Note that the first application screen W1 shown in FIG. 4 is an example, and there is no limitation on captured images, the types of information to be displayed, the positions of the captured images and pieces of information, etc.

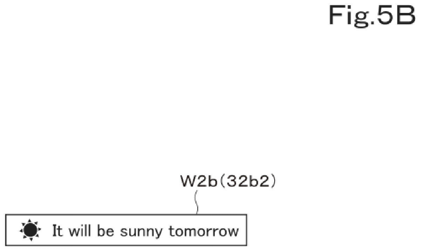

As shown in a display screen G1b of FIG. 5A, the display controller 31b causes the display 34 to display the second application screen W2 (W2a) indicating predetermined information relating to the second application 32b (32b1) and/or the like. The second application 32b need only include a function different from the processes relating to the remote manipulation, and is, for example, as shown in FIG. 5B, a program to provide a notification of weather information using the second application screen W2b. Note that a second application 32b2 may be a program for various settings relating to the remote device 30, or may be a program for intercommunication between the remote user and another user (e-mail software, chat software), and is not limited to the example shown in FIG. 5B.

As shown in FIGS. 4, 5A, 6 to 10 and 15, the display screen G displays a first object 91 to receive a display instruction relating to the first application 32a, a second object 92 to receive a display instruction relating to the second application 32b, and a third object 93 indicating an indicated position corresponding to the operation of the input interface 36 (pointing device 36a). The display controller 31b is configured or programmed to change (move) the position of the displayed third object 93 according to the remote user's operation of the input interface 36. When the remote user moves the third object 93 to the position of the first object 91 or the position of the second object 92 and performs an operation to select such an object, the input interface 36 inputs, into the controller 31, a display instruction signal relating to the first application 32a or the second application 32b corresponding to the operation. The display controller 31b causes the display 34 to display the first application screen W1 and/or the second application screen W2 based on the display instruction signal(s) from the input interface 36. The following describes, in detail, screen transitions of the display screen G of the display 34.

The controller 31 performs remote manipulation by executing the first application 32a according to the operation of the remote manipulator 35 by the remote user. While the controller 31 performs the remote manipulation by executing the first application 32a, the display controller 31b causes the display 34 to display the first application screen W1 as the display screen G.

The display 34 is configured to, in the case where the controller 31 is performing remote manipulation by executing the first application 32a, prioritize displaying the first application screen W1 over displaying the second application screen W2a. Specifically, when the controller 31 performs the remote manipulation, the controller 31 turns ON a priority process flag of the internal memory 31a. When the controller 31 stops the remote manipulation, the controller 31 turns OFF the priority process flag of the internal memory 31a. When the display controller 31b receives a display instruction signal to display the second application screen W2a, the display controller 31b consults (references) the priority process flag of the internal memory 31a and, in the case where the priority process flag is ON, causes the display 34 to display the first application screen W1 in priority. The display 34 displays the first application screen W1 in priority.

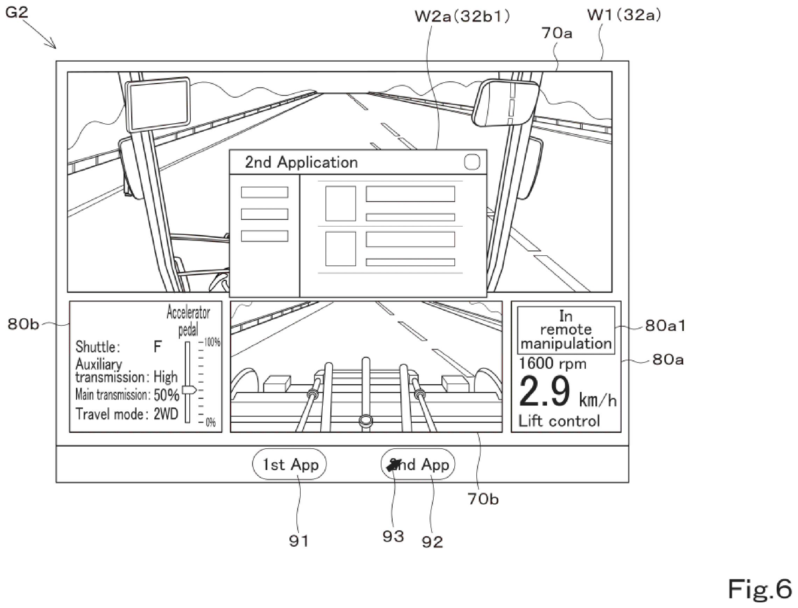

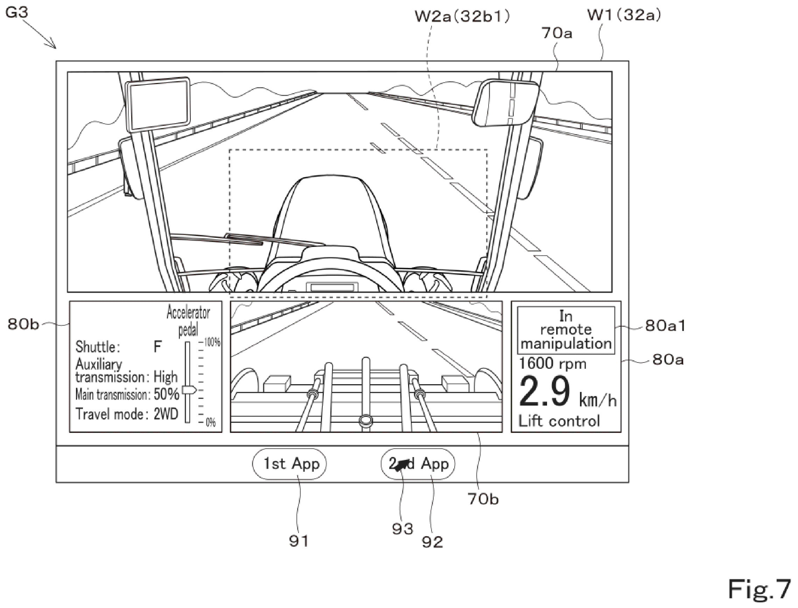

Specifically, when the display controller 31b receives the display instruction signal to display the second application screen W2a while the remote manipulation is being performed (when the priority process flag is ON), the display controller 31b causes the display 34 to display the first application screen W1 instead of displaying the second application screen W2a, as the priority process. For example, the display controller 31b causes the display 34 to display the display screen G2 including the second application screen W2a (FIG. 6) and then display a display screen G1a again (FIG. 4). Note that the display controller 31b may be configured or programmed to cause the display 34 to display the display screen G2 including the second application screen W2a (FIG. 6) and then cause the display 34 to display the first application screen W1 on top of the second application screen W2a in a display screen G3 (FIG. 7).

When the display controller 31b performs the priority process for the first application screen W1, the display controller 31b turns ON a standby flag of the internal memory 31a. The standby flag indicates that the display instruction to display the second application screen W2a has been inputted and that the priority process has been performed.

In the case where the priority process described above is being performed, when the remote user performs an operation to stop the remote manipulation, the controller 31 stops performing the remote manipulation by stopping the first application 32a and turns OFF the priority process flag.

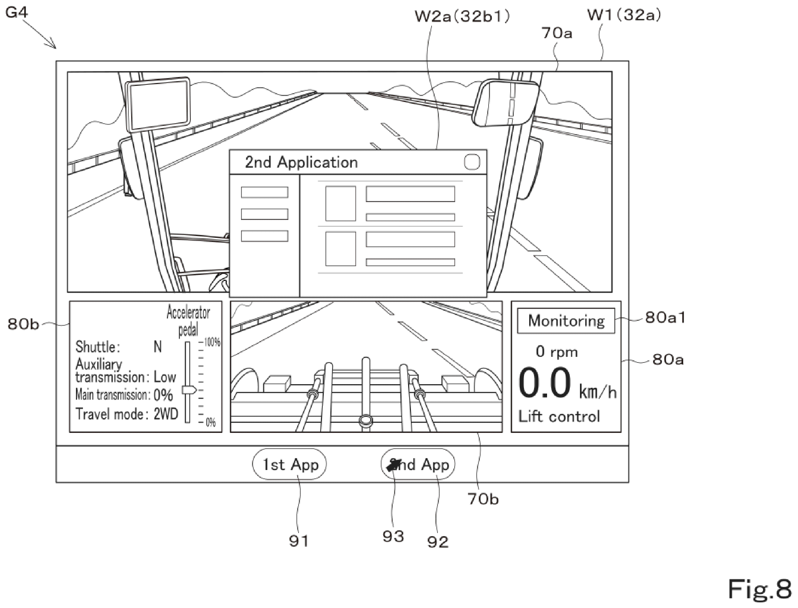

The display controller 31b consults the priority process flag and the standby flag of the internal memory 31a at predetermined interval(s). In the case where the priority process flag is OFF and the standby flag is ON, the display controller 31b causes the display 34 to display a display screen G4 including the second application screen W2a instead of the first application screen W1 (FIG. 8).

FIG. 11 is a flowchart showing the operation of the display controller 31b. The display controller 31b performs, at predetermined interval(s), steps S8 to S11 and S17 shown in FIG. 11 as a single subroutine.

The display controller 31b consults the priority process flag of the internal memory 31a (S9) and, in the case where the priority process flag is ON (YES at S9), the display controller 31b performs the priority process for the first application screen W1 (S10) and turns on the standby flag (S11).

In the case where the priority process flag is OFF (NO at S9), the display controller 31b consults the standby flag of the internal memory 31a (S15) and, in the case where the standby flag is ON (YES at S15), the display controller 31b causes the display 34 to display the second application screen W2a (S8) and turns OFF the standby flag (S16).

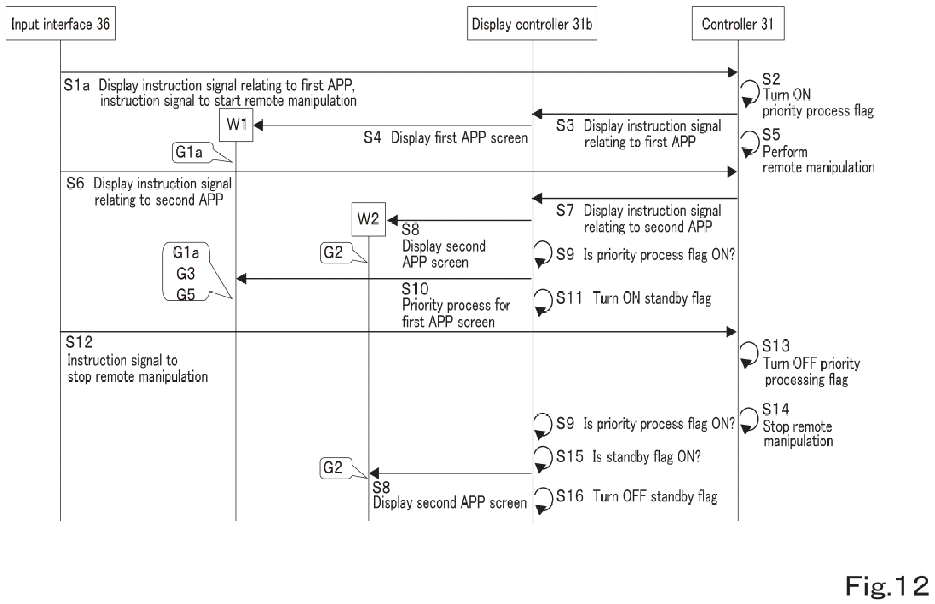

FIG. 12 is a sequence diagram showing the operations of the input interface 36, the display controller 31b, and the controller 31. When the remote user performs an operation to select the first application 32a, the input interface 36 inputs a display instruction signal relating to the first application 32a and a start instruction signal into the controller 31 (S1a). The controller 31 turns ON the priority process flag (S2) and inputs the display instruction signal relating to the first application 32a into the display controller 31b (S3). The display controller 31b causes the display 34 to display the display screen G1a including the first application screen W1 (FIG. 4) (S4). The controller 31 performs remote manipulation by executing the first application 32a (S5).

When the remote user performs an operation to select the second application 32b, the input interface 36 inputs a display instruction signal relating to the second application 32b into the controller 31 (S6). The controller 31 inputs the display instruction signal relating to the second application 32b into the display controller 31b (S7). The display controller 31b causes the display 34 to display the display screen G2 including the second application screen W2a (FIG. 6) (S8).

The display controller 31b consults the priority process flag and detects that the priority process flag is ON (YES at S9), and performs the priority process for the first application screen W1 (S10). The display controller 31b turns ON the standby flag (S11).

When the remote user performs an operation to stop the remote manipulation, the input interface 36 inputs an instruction signal to stop the remote manipulation by stopping the first application 32a into the controller 31 (S12). The controller 31 turns OFF the priority process flag (S13) and stops the remote manipulation by stopping the first application 32a (S14). The display controller 31b consults the priority process flag and detects that the priority process flag is OFF (NO at S9), and consults the standby flag and detects that the standby flag is ON (NO at S15). The display controller 31b causes the display 34 to display the display screen G2 including the second application screen W2a (S8) and turns OFF the standby flag (S16).

FIG. 12 describes a case where the remote user performs the operation to select the second application 32b, i.e., a case where a display instruction signal to display the second application screen W2 from the input interface 36 is inputted into the controller 31, but the display instruction signal relating to the second application 32b may be inputted into the controller 31 by the second application 32b. Specifically, for example, the second application 32b2 shown in FIG. 5B includes the function to display the second application screen W2b as a pop-up screen, and causes the display 34 to display the second application screen W2b when a predetermined condition is satisfied. The predetermined condition is, for example, a case not relying on an instruction provided by the remote user's operation, such as when a predetermined period of time has passed since the last display or when a predetermined notification signal is inputted into the second application 32b. The display controller 31b monitors the presence or absence of an occurrence of an event to cause the second application screen W2b to be displayed. When an event to cause the second application screen W2b to be displayed occurs, the display controller 31b consults the priority process flag and determines whether or not to prioritize the first application screen W1.

### First variation

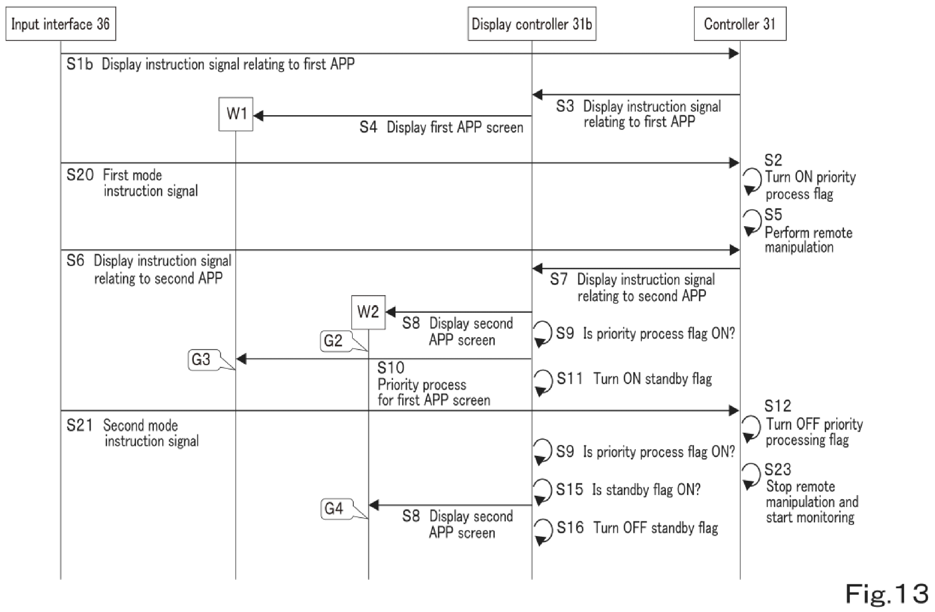

With regard to the first application 32a in the remote device 30 of the above-described example embodiments, the remote user's display instruction to display the first application screen W1 and the start of the remote manipulation are accepted at the same time (S1a in FIG. 12), but the remote device 30 of a first variation is, as shown in FIG. 13, different from the remote device 30 of the above-described example embodiments in that the first application 32a is configured to switch between a first mode to perform the remote manipulation and a second mode to monitor the remote working machine 1 without performing the remote manipulation.

The first mode is a function to perform the remote manipulation of the remote working machine 1 using the remote manipulator 35 and sensing of the surrounding area of the remote working machine 1. The second mode is a function to perform sensing of the surrounding area of the remote working machine 1 without performing the remote manipulation. For example, when the first application 32a switches to the second mode, the remote manipulation is stopped and operations (instructions) via the remote manipulator 35 are not accepted.

For example, when the remote user performs an operation to select the mode display portion 80a1 of the first application screen W1 (FIG. 4), the input interface 36 inputs, into the controller 31, an instruction signal to switch from one of the first mode and the second mode to the other of the first mode and the second mode. The controller 31 switches the first application 32a to the first mode or the second mode based on the instruction signal inputted from the input interface 36. The display controller 31b causes the mode display portion 80a1 to display an indication corresponding to the mode in which the first application 32a is operating.

In the case where the first application 32a is in the first mode, the display controller 31b causes the priority process to be performed upon receipt of a display instruction to display the second application screen W2a and, in the case where the first application 32a is in the second mode, the display controller 31b causes the display 34 to display the second application screen W2a without performing the priority process upon receipt of the display instruction to display the second application screen W2a. Specifically, when the remote user performs an operation to select the first mode, the controller 31 turns ON the priority process flag of the internal memory 31a. When the remote user performs an operation to select the second mode, the controller 31 turns OFF the priority process flag of the internal memory 31a. When the display controller 31b receives the display instruction to display the second application screen W2a, the display controller 31b consults the priority process flag and switches between prioritizing and not prioritizing the first application screen W1.

FIG. 13 is a sequence diagram showing operations of the input interface 36, the display controller 31b and the controller 31 according to the first variation. Note that the sequence triggered by step S6 is similar to that in FIG. 12, and therefore description thereof is omitted here.

When the remote user performs an operation to select the first application 32a, the input interface 36 inputs a display instruction signal relating to the first application 32a into the controller 31 (S1b). The controller 31 inputs the display instruction signal relating to the first application 32a into the display controller 31b (S3). The display controller 31b causes the display 34 to display the first application screen W1 (S4).

When the remote user performs an operation to select the first mode, the input interface 36 inputs a first mode instruction signal into the controller 31 (S20). The controller 31 turns ON the priority process flag (S2) and performs the remote manipulation (S5).

When the remote user performs an operation to select the second mode, the input interface 36 inputs a second mode instruction signal into the controller 31 (S21). The controller 31 turns OFF the priority process flag (S12) and stops the remote manipulation (S23). The display controller 31b consults the priority process flag and detects that the priority process flag is OFF (NO at S9), consults the standby flag and detects that the standby flag is ON (NO at S15). The display controller 31b causes the display 34 to display the display screen G4 including the second application screen W2a (S8).

### Second variation

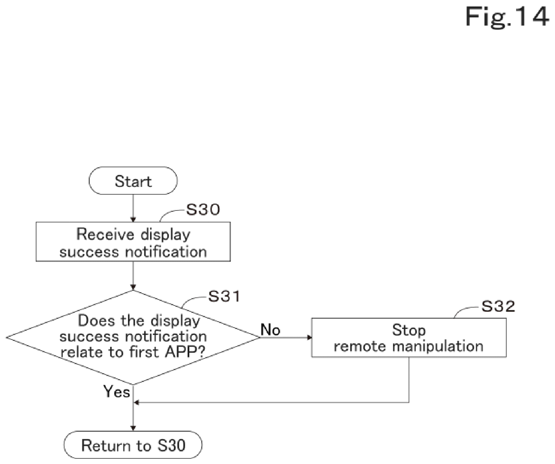

In the remote device 30 of the above-described example embodiments, the first application screen W1 is displayed in priority in the case where the remote manipulation is being performed (S10 in FIGS. 11 and 12), but the remote device 30 of a second variation, as shown in FIG. 14, is different from the remote device 30 of the above-described example embodiments and the first variation in that, when the display 34 displays the second application screen W2a, the remote manipulation is stopped by stopping executing the first application 32a.

Specifically, when a display instruction signal to display the first application screen W1 or the second application screen W2a is inputted from the controller 31, the display controller 31b causes the display 34 to display the display screen G including the first application screen W1 or the second application screen W2a and provides the controller 31 with a notification of whether a control according to the instruction signal has succeeded. The controller 31 determines whether to stop the remote manipulation based on the notification signal from the display controller 31b.

FIG. 14 is a flowchart showing operations of the controller 31 according to the second variation. Steps S30 to S32 shown in FIG. 14 are performed as a subroutine of the controller 31.

The controller 31 receives the notification signal indicating that the display 34 (display screen G) succeeded in display from the display controller 31b (S30). The notification signal includes information indicating which of the first application screen W1 and the second application screen W2 is displayed in the process. The controller 31 determines whether the notification signal inputted from the display controller 31b is a notification signal indicating that the first application screen W1 is successfully displayed (S31). When the controller 31 determines that the notification signal indicates that the first application screen W1 is successfully displayed (YES at S31), the controller 31 returns to step S30 and waits to receive a notification signal. When the controller 31 determines that the notification signal does not indicate that the first application screen W1 is successfully displayed, i.e., the notification signal indicates that the second application screen W2a is successfully displayed (NO at S31), the controller 31 stops the remote manipulation by stopping executing the first application 32a (S32).

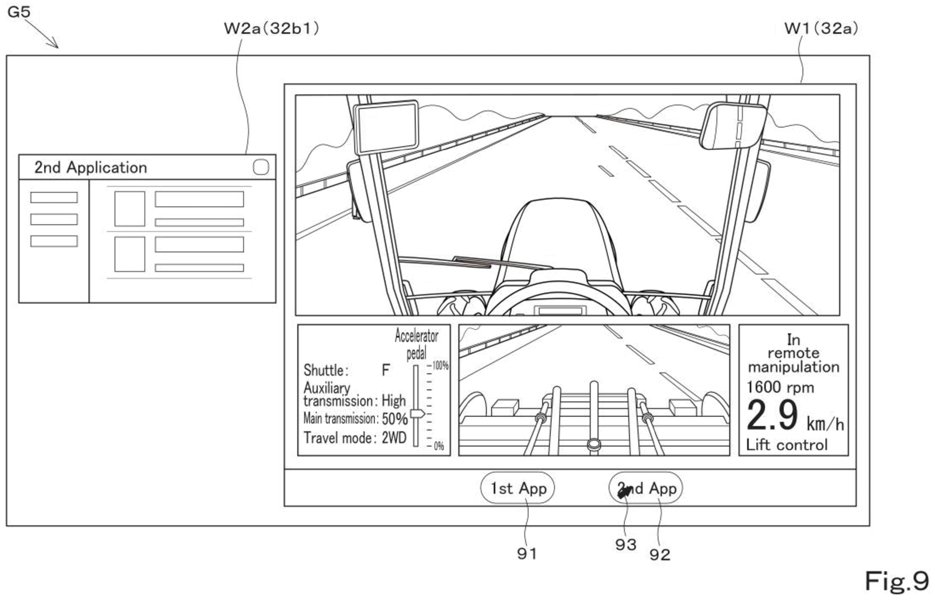

Note that, at step S32, the display controller 31b may cause the display 34 to display information indicating that the remote manipulation has made an emergency stop, as a portion of a process relating to the remote manipulation performed by executing the first application 32a. For example, as shown in FIG. 9, the display controller 31b causes a display screen G6, i.e., a screen in which a notification portion 81 indicating that the remote working machine 1 has made an emergency stop ("In emergency stop") is displayed on the first application screen W1, to be displayed.

### Third variation

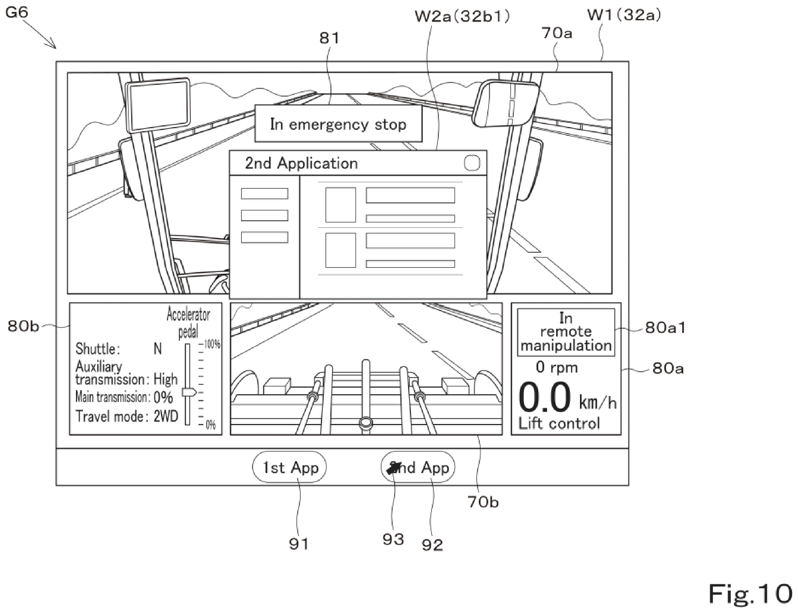

With the remote device 30 of the foregoing example embodiments, the priority process to prioritize the first application screen W1 is performed after the second application screen W2a is displayed such that the second application screen W2a is superimposed on the first application screen W1 (FIG. 6: G2, FIG. 7: G3). The remote device 30 of a third variation, as shown in FIG. 10, is different from the remote device 30 of the foregoing example embodiments, the first variation and the second variation in that when a display instruction to display the second application screen W2 is received, a priority process to display the second application screen W2 in an area that does not overlap the first application screen W1 is performed.

Specifically, when the remote user performs an operation to select the first application 32a, the display controller 31b causes the display 34 to display the first application screen W1 and causes the internal memory 31a to store coordinates information indicating the position where the first application screen W1 is displayed. When the remote user performs an operation to select the second application screen 32b1, the display controller 31b consults the internal memory 31a and causes the second application screen W2a to be displayed in an area where the second application screen W2a does not overlap the first application screen W1 (FIG. 10: display screen G5).

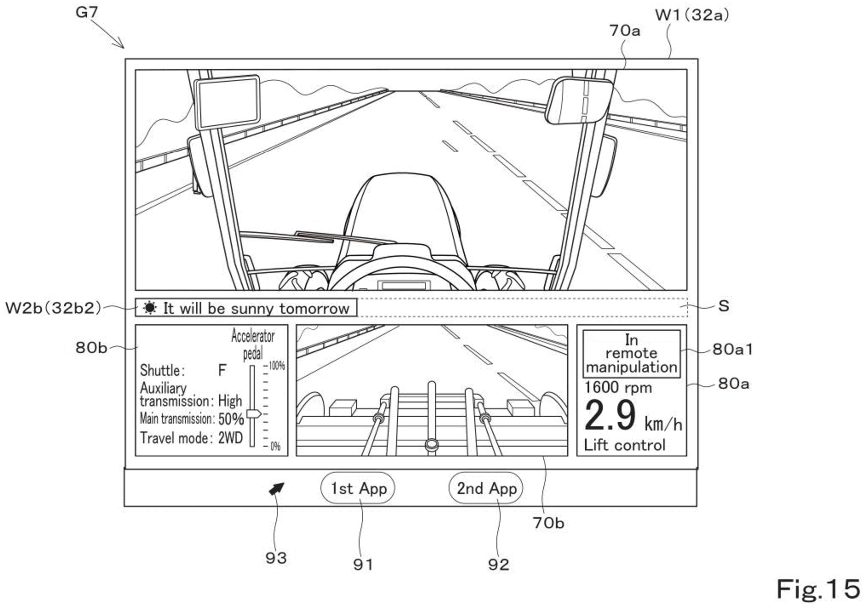

Note that, as shown in FIG. 15, when the display controller 31b determines that the first application screen W1 includes an area S usable for superimposed display and that the second application screen W2 can be displayed in that area, the display controller 31b may cause the second application screen W2 to be displayed such that the second application screen W2 is superimposed on the area S of the first application screen W1, as the priority process. The area S usable for superimposed display is, for example, an area in which information relating to the remote manipulation is not displayed.

When the display controller 31b causes the display 34 to display the first application screen W1, the display controller 31b causes the internal memory 31a to store information (coordinates information, area) relating to the area S usable for superimposed display. When the display controller 31b receives a display instruction to display the second application screen W2b, the display controller 31b consults the internal memory 31a, and determines whether a display area to be occupied by the second application screen W2b for which the display instruction is received is smaller than the area S or not. When the display controller 31b determines that the display area to be occupied by the second application screen W2b is smaller than the area S, the display controller 31b causes the second application screen W2b to be displayed such that the second application screen W2b is superimposed on the area S (FIG. 15: G7).

### Fourth variation

The remote device 30 of the foregoing example embodiments accepts input of operations (instructions) relating to the second application 32b via the input interface 36 even in the case where the remote manipulation is being performed. The remote device 30 of a fourth variation is different from the remote device 30 of the foregoing example embodiments and the first to third variations in that in the case where the remote manipulation is being performed (in the case where the priority process flag is ON), the operations of the input interface 36 by the remote user are restricted and operations for display relating to the second application 32b is not accepted.

As described earlier, the display controller 31b causes the display 36 to display the first object 91 to receive the display instruction relating to the first application 32a, the second object 92 to receive the display instruction relating to the second application 32b, and the third object 93 indicating an indicated position corresponding to the operation of the input interface 36 (pointing device 36a).

In the case where the controller 31 is performing the remote manipulation by executing the first application 32a, the input interface 36 accepts operations at an area excluding the second object 92.

The internal memory 31a prestores a list including object(s) (area(s)) that do not accept the remote user's operations (instructions from the remote user) in the case where the priority process flag is ON. For example, the list includes an area in which the second object is located, as an area that does not accept operations (instructions). When the remote user operates the input interface 36, the input interface 36 calculates the position on the display screen G that is indicated by the remote use's operation based on the detection result(s) from sensor(s) of the input interface 36. When the input interface 36 calculates the indicated position, the input interface 36 consults the list and determines whether to input an instruction signal corresponding to the indicated position into the controller 31.

For example, as shown in FIG. 4, the remote user operates the input interface 36 to select the mode display portion 80a1 on the display screen G1a indicating that the remote manipulation is performed by executing the first application 32a. As described earlier, a process to switch between the first mode and the second mode is associated with the mode display portion 80a1. The input interface 36 determines whether to accept the operation (instruction) based on the detected indicated position and the list. The input interface 36 determines to accept the operation (instruction) and inputs an instruction signal to switch between the first mode and the second mode into the controller 31.

The remote user operates the input interface 36 to select the second object 92 on the display screen G1a which is displayed when the remote manipulation is being performed by executing the first application 32a. The input interface 36 determines whether to accept the operation (instruction) based on the detected indicated position and the list. The input interface 36 determines not to accept the operation (instruction) and does not input the instruction signal into the controller 31.

The display controller 31b limits a range where the third object 93 is allowed to be displayed to an area excluding the second object 92.

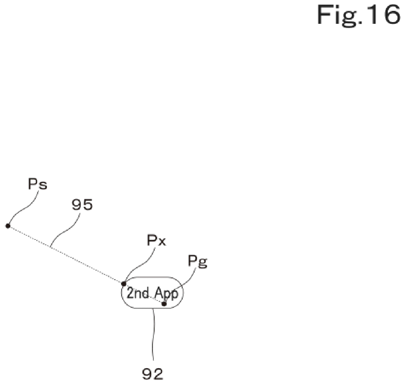

FIG. 16 illustrates the range where the third object 93 is allowed to be displayed according to the fourth variation. A path 95 connecting a start point Ps and an end point Pg is the indicated position calculated based on the detection result(s) from the sensor(s) of the input interface 36. The display controller 31b updates the position at which the third object 93 is displayed on the display 34 within a segment between the start point Ps and a position Px along the path 95. With this, the third object 93 moves from the position Ps to the position Px. The display controller 31b determines that a segment between the position Px and the end point Pg is in the area of the second object 92 and does not update the position of the displayed third object 93. With this, the range where the third object 93 is allowed to be displayed is limited to the area excluding the second object 92.

While the display 34 is displaying the first application screen W1, the input interface 36 does not accept operations for the first object 91 and the second object 92. Specifically, while the display 34 is displaying the first application screen W1, the input interface 36 disables the function of the driver to calculate (define) an instruction signal corresponding to an operation. With this, the input interface 36 is in a state where, even if the sensor(s) of the input interface 36 detect an operation, the input interface 36 does not input the corresponding instruction signal into the controller 31 (does not accept operations).

Note that the controller 31 may be configured to achieve a state where operations via the input interface 36 are not accepted. Specifically, while the display 34 is displaying the first application screen W1, the controller 31 ignores the display instruction signal relating to the first application 32a and the display instruction signal relating to the second application 32b from the input interface 36.

Example embodiments of the present invention provide remote devices 30 and remote manipulation systems 100 as described in the following items.

(Item A1) A remote device 30 including a first communicator 33 to communicate with a remote working machine 1, a remote manipulator 35 to receive an operation, a controller 31 configured or programmed to execute a first application 32a to perform a process relating to a remote manipulation of the remote working machine 1 via the first communicator 33 in accordance with the operation of the remote manipulator 35, and a second application 32b to perform a process not relating to the remote manipulation, and a display 34 to display a first application screen W1 to indicate information relating to the first application 32a, and a second application screen W2 to indicate information relating to the second application 32b, wherein the display 34 is configured to, in a case where the controller 31 is performing the remote manipulation by executing the first application 32a, prioritize displaying the first application screen W1 over displaying the second application screen W2.

The remote device 30 according to item A1, in the case where the remote user performs remote manipulation while checking information relating to the remote manipulation, eliminates or reduces the likelihood that the remote manipulation will be hindered by information not relating to the remote manipulation displayed on the display 34.

(Item A2) The remote device 30 according to item A1, wherein the display 34 is configured to, upon receipt of a display instruction to display the second application screen W2 in a case where the controller 31 is performing the remote manipulation by executing the first application 32a, display the first application screen W1 instead of the second application screen W2, as a priority process.

With the remote device 30 according to item A2, since the second application screen W2 is not displayed in the case where the display 34 is displaying the first application screen W1, the remote user can continue the remote manipulation without having the remote manipulation hindered by the second application screen W2.

(Item A3) The remote device 30 according to item A2, wherein the first application 32a is configured to switch between a first mode to perform the remote manipulation and a second mode to monitor the remote working machine 1 without performing the remote manipulation, and the display 34 is configured to, in a case where the first application 32a is in the first mode, perform the priority process upon receipt of the display instruction to display the second application screen W2, and in a case where the first application 32a is in the second mode, display the second application screen W2 without performing the priority process upon receipt of the display instruction to display the second application screen W2.

With the remote device 30 according to item A3, in the case where the remote user is not performing the remote manipulation, the second application screen W2 can be displayed, improving the versatility of the remote device 30.

(Item A4) The remote device 30 according to item A2, wherein the display 34 is configured to, when the controller 31 stops performing the remote manipulation by stopping executing the first application 32a in a case where the display 34 is performing the priority process, display the second application screen W2 instead of the first application screen W1.

With the remote device 30 according to item 4, the second application screen W2 can be displayed in the case where the remote manipulation is stopped, improving the versatility of the remote device 30.

(Item A5) The remote device 30 according to item A2, wherein the display 34 is configured to, upon receipt of the display 34 receives the display instruction to display the second application screen W2 in a case where the controller 31 is performing the remote manipulation by executing the first application 32a, display the second application screen W2 and then display the first application screen W1 again, as the priority process.

With the remote device 30 according to item A5, since it is possible for the remote user to continue identifying the first application 32a while being informed that the display instruction to display the second application screen W2 was made during the remote manipulation, the remote manipulation can be performed stably.

(Item A6) The remote device 30 according to item A5, wherein the display 34 is configured to, upon receipt of the display instruction to display the second application screen W2 in a case where the controller 31 is performing the remote manipulation by executing the first application 32a, display the second application screen W2 and then display the first application screen W1 on top of the second application screen W2, as the priority process.

With the remote device 30 according to item A6, since it is possible for the remote user to continue identifying the first application 32a while being informed that the display instruction to display the second application screen W2 was made during the remote manipulation, the remote manipulation can be performed stably.

(Item A7) The remote device 30 according to item A2, wherein the display 34 is configured to, upon receipt of the display instruction to display the second application screen W2 in a case where the controller 31 is performing the remote manipulation by executing the first application 32a, display the second application screen W2 in an area that does not overlap the first application screen W1, as the priority process.

With the remote device 30 according to item A7, the remote user can appropriately visually recognize the first application 32a which needs more attention than the second application 32b, and therefore work efficiency improves.

(Item A8) The remote device 30 according to any one of items A1 to A7, wherein the display 34 is configured to display the second application screen W2 upon receipt of a display instruction to display the second application screen W2 in a case where the controller 31 is performing the remote manipulation by executing the first application 32a, and the controller 31 is configured or programmed to stop performing the remote manipulation by stopping executing the first application 32a when the display 34 displays the second application screen W2.

With the remote device 30 according to item A8, it is possible to eliminate or reduce the likelihood that the remote user will perform the remote manipulation while looking at the second application screen W2.

(Item A9) The remote device 30 according to any one of items A1 to A8, further including an input interface 36 to receive an input, wherein the display 34 is configured to display a first object 91 to receive a display instruction relating to the first application 32a and a second object 92 to receive a display instruction to display the second application screen W2, and the input interface 36 is configured such that, in a case where the controller 31 is performing the remote manipulation by executing the first application 32a, an operation is accepted at an area excluding the second object 92.

With the remote device 30 according to item A9, in the case where the first application 32a is performing the remote manipulation, the display 34 does not display the second application screen W2. Thus, it is possible to eliminate or reduce the likelihood that the remote user will perform the remote manipulation while looking at the second application screen W2.

(Item A10) The remote device 30 according to item A9, wherein the display 34 is configured to display a third object 93 indicating an indicated position corresponding to the operation of the input interface 36, and in a case where the controller 31 is performing the remote manipulation by executing the first application 32a, limit a range where the third object 93 is allowed to be displayed to the area excluding the second object 92.

With the remote device 30 according to item A10, it is possible to easily eliminate or reduce the likelihood that the display 34 will display the second application screen W2 while the first application 32a is performing the remote manipulation.

(Item A11) The remote device 30 according to any one of items A1 to A8, further including an input interface 36 to receive an input, wherein the display 34 is configured to display (i) a first object 91 to be operated via the input interface 36 and receive a display instruction relating to the first application 32a and (ii) a second object 92 to be operated via the input interface 36 and receive a display instruction to display the second application screen W2, and the input interface 36 is configured to not accept operations for the first object 91 and the second object 92 while the display 34 is displaying the first application screen W1.

With the remote device 30 according to item A11, the display 34 does not display the second application screen W2 while the first application 32a is performing the remote manipulation. Thus, it is possible to eliminate or reduce the likelihood that the remote user will perform the remote manipulation while looking at the second application screen W2.

(Item A12) A remote manipulation system 100 including the remote device 30 according to any one of items A1 to A11, and the remote working machine 1 to be remotely manipulated by the remote device 30, wherein the remote working machine 1 includes a second communicator 23 to mutually communicate with the first communicator 33.

With the remote manipulation system 100 according to item A12, it is possible to provide the remote manipulation system 100 to achieve one or more of the foregoing advantageous effects.

While preferred embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: Remote working machine
- 23: Second communicator
- 30: Remote device
- 31: Controller
- 32a: First application
- 32b (32b1, 32b2): Second application
- 33: First communicator
- 34: Display
- 35: Remote manipulator
- 36: Input interface
- 91: First object
- 92: Second object
- 93: Third object
- 100: Remote manipulation system
- W1: First application screen
- W2 (W2a, W2b): Second application screen

## Claims

1. A remote device comprising:
a first communicator to communicate with a remote working machine;
a remote manipulator to receive an operation;
a controller configured or programmed to execute a first application to perform a process relating to a remote manipulation of the remote working machine via the first communicator in accordance with the operation of the remote manipulator, and a second application to perform a process not relating to the remote manipulation; and
a display to display a first application screen to indicate information relating to the first application, and a second application screen to indicate information relating to the second application; wherein
the display is configured to, in a case where the controller is performing the remote manipulation by executing the first application, prioritize displaying the first application screen over displaying the second application screen.

2. The remote device according to claim 1, wherein the display is configured to, upon receipt of a display instruction to display the second application screen in a case where the controller is performing the remote manipulation by executing the first application, display the first application screen instead of the second application screen, as a priority process.

3. The remote device according to claim 2, wherein
the first application is configured to switch between a first mode to perform the remote manipulation and a second mode to monitor the remote working machine without performing the remote manipulation; and
the display is configured to, in a case where the first application is in the first mode, perform the priority process upon receipt of the display instruction to display the second application screen, and in a case where the first application is in the second mode, display the second application screen without performing the priority process upon receipt of the display instruction to display the second application screen.

4. The remote device according to claim 2, wherein the display is configured to, when the controller stops performing the remote manipulation by stopping executing the first application in a case where the display is performing the priority process, display the second application screen instead of the first application screen.

5. The remote device according to claim 2, wherein the display is configured to, upon receipt of the display instruction to display the second application screen in a case where the controller is performing the remote manipulation by executing the first application, display the second application screen and then display the first application screen again, as the priority process.

6. The remote device according to claim 5, wherein the display is configured to, upon receipt of the display instruction to display the second application screen in a case where the controller is performing the remote manipulation by executing the first application, display the second application screen and then display the first application screen on top of the second application screen, as the priority process.

7. The remote device according to claim 2, wherein the display is configured to, upon receipt of the display instruction to display the second application screen in a case where the controller is performing the remote manipulation by executing the first application, display the second application screen in an area that does not overlap the first application screen, as the priority process.

8. The remote device according to claim 1, wherein
the display is configured to display the second application screen upon receipt of a display instruction to display the second application screen in a case where the controller is performing the remote manipulation by executing the first application; and
the controller is configured or programmed to stop performing the remote manipulation by stopping executing the first application when the display displays the second application screen.

9. The remote device according to claim 1, further comprising:
an input interface to receive an input; wherein
the display is configured to display a first object to receive a display instruction relating to the first application and a second object to receive a display instruction to display the second application screen; and
the input interface is configured such that, in a case where the controller is performing the remote manipulation by executing the first application, an operation is accepted at an area excluding the second object.

10. The remote device according to claim 9, wherein the display is configured to:
display a third object indicating an indicated position corresponding to the operation of the input interface; and
in a case where the controller is performing the remote manipulation by executing the first application, limit a range where the third object is allowed to be displayed to the area excluding the second object.

11. The remote device according to claim 1, further comprising:
an input interface to receive an input; wherein
the display is configured to display (i) a first object to be operated via the input interface and receive a display instruction relating to the first application and (ii) a second object to be operated via the input interface and receive a display instruction to display the second application screen; and
the input interface is configured to not accept operations for the first object and the second object while the display is displaying the first application screen.

12. A remote manipulation system comprising:
the remote device according to any one of claims 1 to 11; and
the remote working machine to be remotely manipulated by the remote device; wherein
the remote working machine includes a second communicator to mutually communicate with the first communicator.
